# EUROPÄISCHE PATENTANMELDUNG

(11) **EP 0 802 674 A2**
(43) Veröffentlichungstag der Anmeldung: **22.10.1997**
(21) Anmeldenummer: 97201013.6
(22) Anmeldetag: 07.04.1997
(51) Int. Cl.: H04N 5/445

(54) **Schaltungsanordnung für Anzeige-und Steuerungsfunktionen eines Fernsehgerätes**

(30) Priorität: 17.04.1996 DE 19615086
(71) Anmelder: Philips Patentverwaltung GmbH, 22335 Hamburg (DE); PHILIPS ELECTRONICS N.V., 5621 BA Eindhoven (NL)
(72) Erfinder: von Vignau, Ralph, Röntgenstrasse 24, 22335 Hamburg (DE); Plog, Jürgen, Röntgenstrasse 24, 22335 Hamburg (DE)
(74) Vertreter: von Laue, Hanns-Ulrich, Dipl.-Ing.

(57) **Zusammenfassung**

Eine Schaltungsanordnung mit einer integrierten Schaltung (1), in der ein Mikroprozessor (5) vorgesehen ist, der einen in der integrierten Schaltung (1) vorgesehenen Anzeigegenerator (6) für Teletext- und/oder On-Screen-Display-Funktionen steuert und der mittels eines in der integrierten Schaltung (1) vorgesehenen Steuerungs-Interfaces (12) Steuerungsfunktionen eines Fernsehgerätes (4) wahrnimmt, ist zur möglichst flexiblen Anpassung an sich verändernde Umgebungsbedingungen dadurch gekennzeichnet, daß in der integrierten Schaltung (1) ein Speicher-Inter-#face (10) zu einem außerhalb der integrierten Schaltung (1) vorgesehen Nur-Lese-Speicher (2) vorgesehen ist und daß der Nur-Lese-Speicher (2) wenigstens einen Teil des Programm-Codes für den Mikroprozessor (5) und wenigstens einen Zeichensatz für die Teletext-Funktion und ggf. weitere vorgesehene Anzeigefunktionen enthält.

## Beschreibung

Die Erfindung betrifft eine Schaltungsanordnung mit einer integrierten Schaltung, in der ein Mikroprozessor vorgesehen ist, der einen in der integrierten Schaltung vorgesehenen Anzeigegenerator für Teletext- und/oder On-Screen-Display-Funktionen steuert und der mittels eines in der integrierten Schaltung vorgesehenen Steuerungs-Interfaces Steuerungsfunktionen eines Fernsehgerätes wahrnimmt.

Eine derartige integrierte Schaltung wird von der Philips unter der Typenbezeichnung SAA 5290 vertrieben. Diese enthält einen Microprozessor, der in der Lage ist, Steuerungsaufgaben für das Fernsehgerät, in das die integrierte Schaltung eingebaut sein kann, zu übernehmen. Ferner ist in der integrierten Schaltung ein Decoder für Teletextfunktionen vorgesehen. Dieser Decoder ist als reine Hardware ausgeführt. Die Schaltung ist in der Lage, sogenannte On-Screen-Display (OSD)-Funktionen zu übernehmen; eine derartige Darstellung kann beispielsweise in der Darstellung der gerade eingestellten Lautstärke bestehen. Die in dem IC, insbesondere für den Mikroprozessor, benötigte Software ist in Form eines ROMs in dem IC enthalten. Damit läßt sich diese Software nicht an wechselnde Umgebungsbedingungen anpassen. Ein bestimmter Typ eines derartigen integrierten Schaltkreises ist damit nicht für verschiedene Geräte oder für verschiedene Einsatzzwecke geeignet.

Es ist Aufgabe der Erfindung, die eingangs genannte Schaltungsanordnung dahingehend weiterzuentwickeln, daß ein universellerer Einsatz und eine einfachere Anpassung an andere Umgebungen möglich ist.

Diese Aufgabe wird erfindungsgemäß dadurch gelöst, daß in der integrierten Schaltung ein Speicher-Interface zu einem außerhalb der integrierten Schaltung vorgesehen Nur-Lese-Speicher vorgesehen ist und daß der Nur-Lese-Speicher wenigstens einen Teil des Programm-Codes für den Mikroprozessor und wenigstens einen Zeichensatz für die Teletext-Funktion und ggf. weitere vorgesehene Anzeigefunktionen enthält.

In der erfindungsgemäßen Schaltung ist außerhalb der Schaltung ein Nur-Lese-Speicher (ROM/Read Only Memory) vorgesehen, der wenigstens einen Teil des Programmcodes für den Mikroprozessor sowie die für die Teletext-funktionen bzw. On-Screen-Display-Funktionen benötigten Zeichensätze bzw. Zeichen enthält. Es kann darüber hinaus auch in der integrierten Schaltung ein ROM vorgesehen sein, der beispielsweise für solche Teile des Programm-Codes geeignet ist, die anwendungsunabhängig sind.

Der extern vorgesehene Nur-Lese-Speicher bietet den Vorteil, daß er leicht austauschbar ist und somit leicht eine Anpassung an verschiedene Geräte oder Umgebungsbedingungen stattfinden kann. Der integrierte Schaltkreis ais solcher kann somit immer in identischer Weise ausgeführt werden, was seine Kosten senkt. Eine Anpassung an verschiedene Umgebungen, beispielsweise verschiedene Fernsehgerätetypen, für die die Schaltungsanordnung vorgesehen ist, führt dann nur noch zu einer Anpassung des Codes in dem Nur-Lese-Speicher. Somit ist auch eine Aktualisierung an veränderte Umgebungsbedingungen auf diese Weise leicht möglich.

Dadurch, daß für die Programm-Codes für den Mikroprozessor, oder wenigstens Teile der Programm-Codes, und für die Zeichen bzw. Zeichensätze für die Teletext-funktionen und/oder On-Screen-Display-Funktionen nur ein Nur-Lese-Speicher vorgesehen ist, hält sich der externe Schaltungsaufwand in Grenzen.

Gemäß einer Ausgestaltung der Erfindung ist eine Betriebssystem-Software für den Mikroprozessor vorgesehen, welche wenigstens teilweise in dem externen Nur-Lese-Speicher abgespeichert ist und welche eine Software-Schnittstelle aufweist, auf die Anwendungsprogramme aufsetzbar sind, welche ausschließlich in dem externen Nur-Lese-Speicher abgespeichert sind.

Um den Mikroprozessor und damit die gesamte integrierte Schaltung möglichst universell einsetzbar zu machen, ist eine Betriebssystem-Software für den Mikroprozessor vorgesehen, die direkt auf Hardware des Mikroprozessors aufsetzt. Diese Betriebssystem-Software als solche bietet noch nicht die benötigten Funktionen für On-Screen-Display Darstellung, Teletextfunktionen oder Steuerung des Fernsehgerätes. Die Betriebssystem-Software dient als Basis für auf diese aufzusetzende Anwendungssoftware, welche dann die benötigten Funktionen herstellt. Die hardwarenahe Betriebssystem-Software kann teilweise in dem integrierten Schaltkreis und teilweise in dem externen Nur-Lese-Speicher vorgesehen sein. Dabei ist es vorteilhaft, diejenigen Teile der Betriebssystem-Software, die zeitkritisch sind, innerhalb des integrierten Schaltkreises vorzusehen und die weniger zeitkritischen, also langsamer laufenden Teile der Betriebssystem-Software in dem externen Nur Lese Speicher abzuspeichern. In jedem Falle ist die auf diese Betriebssystem-Software aufsetzende Anwendungssoftware für Anwendungsprogramme in dem externen Nur-Lese-Speicher vorgesehen. Damit bleibt der Vorteil einer schnellen Anpassung an veränderte oder verschiedene Anwendungsbedingungen erhalten, da in diesen Fällen nur die Anwendungsprogramme bzw. die Anwendungssoftware als solche zu ändern sind, die in dem externen Nur-Lese-Speicher abgespeichert sind. Die hardwarenahe Betriebssystem-Software bleibt unverändert, so daß es keine Rolle spielt, daß ein Teil dieser Software gegebenenfalls in der integrierten Schaltung in einem in dieser vorgesehenen Nur-Lese-Speicher abgespeichert ist.

Gemäß einer weiteren Ausgestaltung der Erfindung ist in der integrierten Schaltung eine Daten-Empfangseinheit vorgesehen, über die von einer externen Signalquelle, insbesondere einer Empfangseinheit eines Fernsehgerätes, Teletext-Daten sowie ggf. weitere Daten empfangen werden, die in der Daten-Empfangseinheit identifiziert und Analog/Digital-gewandelt werden, und daß die von der Empfangs-Einheit gelieferten digitalen Daten der integrierten Schaltung Software-gesteuert mittels des Mikroprozessors dekodiert und weiterverarbeitet werden.

Zur Verarbeitung von Teletext-Daten werden der Daten-Empfangseinheit in der integrierten Schaltung von einer Empfangseinheit eines Fernsehgerätes die Bildzeilen eines Fernsehsignals zugeführt. Die Daten-Empfangseinheit ermittelt die Zeilen, welche Teletext-Daten oder andere Daten enthalten. In der Daten-Empfangseinheit findet eine Analog-Digital-Wandlung der Bildzeilen statt, die diese Daten enthalten. Innerhalb des integrierten Schaltkreises werden dann die Daten zur Verfügung gestellt. Die Dekodierung der Teletext-Daten findet Software-gesteuert statt, d.h. es ist kein Hardware-Dekoder vorgesehen, sondern die Dekodierung findet mittels des Mikroprozessors und eines entsprechend vorgesehenen Programmes statt.

Gemäß einer weiteren Ausgestaltung der Erfindung ist vorgesehen, daß der Anzeigegenerator zum Aufbau beliebiger Graphiken ausgelegt ist, deren Ausgang-Daten der integrierten Schaltung von außen, insbesondere von dem externen Nur-Lese-Speicher, zugeführt werden und die in der integrierten Schaltung weiterverarbeitet werden.

Die Daten für den Aufbau solcher Graphiken sind vorzugsweise in dem externen Nur-Lese-Speicher abgespeichert. Sie werden aus diesem Speicher gelesen und in der integrierten Schaltung gesteuert durch den Mikroprozessor weiterverarbeitet. Damit besteht auch für derartige Graphiken der Vorteil, daß sie leicht verändert werden können, nämlich durch eine andere Programmierung des externen Nur-Lese-Speichers.

Für eine weitere Ausgestaltung der Erfindung ist vorgesehen, daß mittels des Mikroprozessors Sofware-gesteuert beliebige Pixelgraphiken aus in dem externen Nur-Lese-Speicher abgelegten Ausgangsdaten generiert werden, wobei diese Pixelgraphiken eine vorwählbare Pixel- und Farb-Auflösung aufweisen und gegebenenfalls nach Zwischenspeicherung mittels der Anzeigeeinheit in ein für eine Anzeige geeignetes Format gebracht werden.

In dem externen Nur-Lese-Speicher abgespeicherte Graphiken können ggf. in der integrierten Schaltung weiterverarbeitet werden. Dies bietet vielfältige Anzeigemöglichkeiten, die durch den Aufbau der integrierten Schaltung relativ leicht realisierbar sind. Gesteuert durch den Mikroprozessor bzw. ein Software-Programm werden die in der ursprünglichen Form extern abgespeicherten Pixelgraphiken innerhalb des integrierten Schaltkreises weiterverarbeitet, so daß neue Graphiken aus diesen entstehen. Durch ihren Aufbau ist die Schaltungsanordnung in der Lage, hochauflösende Pixelgraphiken zu erzeugen bzw. weiterzuverarbeiten. Dabei kann vorteilhaft mit den extern abgelegten Graphiken gleichzeitig eine Information darüber abgelegt sein, welche Pixel- und welche Farb-Auflösung diese aufweisen. Die weiterverarbeiteten hochauflösenden Graphiken können ggf. innerhalb der integrierten Schaltung zwischengespeichert und anschließend mittels der Anzeigeeinheit in ein Format gebracht werden, daß das Fernsehgerät weiterverarbeiten kann und zur Anzeige bringen kann. Es ist damit mittels der erfindungsgemäßen Schaltungsanordnung die Möglichkeit gegeben, auf einem Fernsehgerät hochauflösende Graphiken in beliebiger gewünschter Form darzustellen. Dies kann beispielsweise für On-Screen-Display Zwecke geschehen, es besteht aber auch die Möglichkeit, auf diese Weise Effekte, verbesserte Graphiken für Teletext-Funktionen oder Ähnliches zu erzeugen.

Dabei kann vorteilhaft, wie gemäß einer weiteren Ausgestaltung der Erfindung vorgesehen ist, zur Zwischenspeicherung hochauflösender Graphiken innerhalb des integrierten Schaltkreises eine Speichereinheit in diesem vorgesehen sein. Diese Speichereinheit kann ggf. auch dazu herangezogen werden, einen graphischen Cursor zu speichern. Ein solcher graphischer Cursor hat keine feste vorgegebene Form, sondern kann verschiedene Formen aufweisen, die in dem Speicher abgespeichert sind. Damit kann die Form des Cursors für die jeweilige Situation der Anzeige angepaßt werden.

Gemäß einer weiteren Ausgestaltung der Erfindung ist vorgesehen, daß in der integrierten Schaltung ein Daten-Dekoder für Sonderfunktionen, wie zum Beispiel Hamming-Dekodierung, CRC-Fehlerkorrektur oder Entschlüsselung verschlüsselter Programme vorgesehen ist. Durch die Integration eines derartigen Daten-Dekoders ist entsprechender externer Schaltkreis nicht erforderlich. Der intern vorgesehene Daten-Dekoder kann für verschiedene Zwecke eingesetzt werden, ist also universell verwendbar.

Dabei kann der Dekoder vorteilhafterweise, wie gemäß einer weiteren Ausgestaltung der Erfindung vorgesehen ist, ihm zugeführte Daten ständig dem Dekodier-Prozeß unterziehen. Dabei werden die Ausgangsdaten des Dekoders nur dann abgefragt, wenn es sich um kodierte Daten handelte. Dies hat den Vorteil, daß dann, wenn erkannt wird, daß Daten in dekodierter Form vorliegen, diese sofort von der Dekodiereinheit in dekodierter Form zur Verfügung gestellt werden können. Würde der Dekodier-Prozeß nicht ständig ablaufen, wäre es beim Erkennen kodierter Daten erforderlich, diese dem Dekoder nochmals zuzuführen, so daß dieser die Dekodierung vornehmen kann. Dieses erneute Zuführen von Daten entfällt dadurch, daß der Dekodier-Prozeß kontinuierlich abläuft und somit jederzeit eine Abfrage dekodierter Daten möglich ist.

Gemäß einer weiteren Ausgestaltung der Erfindung ist in der integrierten Schaltung eine Synchronisier-Einheit vorgesehen, welche aus einem extern zugeführten Taktsignal in dem integrierten Scahltkreis benötigte Taktsignale verschiedener Frequenz generiert. Das extern zugeführte Taktsignal kann beispielsweise von einem Quarz geliefert werden. Die Synchronisier-Einheit erzeugt aus diesem extern zugeführten Taktsignal verschiedene Taktsignale verschiedener Frequenz innerhalb des Schaltkreises.

Für diese Synchronisiereinheit ist gemäß einer weiteren Ausgestaltung der Erfindung vorgesehen, daß diese die für den Anzeigegenerator erzeugten Taktsignale bezüglich ihrer Frequenz in Abhängigkeit der Anzeigeparameter eines gewählten Graphikstandards variiert. Die oben erwähnten hochauflösenden Graphiken können verschiedene Anzeigeformate aufweisen, so kann es sich beispielsweise um Graphiken eines Seiten-Höhen-Verhältnisses von 16:9 oder 4:3 handeln, aber auch die Graphik-Auflösung kann variieren, je nach Parametern dieser Anzeige werden verschiedene Taktfrequenzen benötigt. Die Synchronisiereinheit liefert an den Anzeigegenerator Taktsignale, deren Frequenz an die Parameter des Anzeigeformats angepaßt sind.

Nachfolgend wird anhand der Zeichnung bzw. deren einziger Figur ein Ausführungsbeispiel der Erfindung näher erläutert.

Die Figur zeigt in Form eines Blockschaltbildes eine erfindungsgemäße Schaltungsanordnung.

Die Figur stellt in schematischer Darstellung einen integrierten Schaltkreis 1, der mehrere Schaltungselemente enthält, sowie externe Schaltungselemente dar..

Extern dieses integrierten Schaltkreises 1 ist ein Nur-Lese-Speicher 2 (ROM - Read Only Memory) vorgesehen. Es ist ferner Schreib-/Lese-Speicher 3 (RAM - Random Access Memory) vorgesehen. Extern des integrierten Schaltkreises 1 ist ferner ein Schaltungsblock 4 angedeutet, bei dem es sich beispielsweise um Schaltungselemente eines nicht näher dargestellten Fernsehgerätes handeln kann, in das der integrierte Schaltkreis 1 und die Speicher 2 und 3 eingesetzt sind.

Innerhalb des integrierten Schaltkreises 1 ist ein Mikroprozessor 5 vorgesehen, welcher alle in dem integrierten Schaltkreis 1 vorgesehenen Schaltungselemente steuert.

Der integrierte Schaltkreis 1 weist ferner einen Anzeigegenerator 6 auf, der ausgangsseitig ein Signal liefert, das auf einem Bildschirm des Fernsehgerätes 4 zur Darstellung kommen kann.

In dem integrierten Schaltkreis ist ferner eine Synchronisiereinheit 7 vorgesehen, welche verschiedene Taktsignale für die Schaltungskreise innerhalb des integrierten Schaltkreises 1 liefert. Der Synchronisiereinheit 7 wird von außen ein Taktsignal fester Frequenz, beispielsweise von einem Quarzoszillator stammend, zugeführt.

In dem integrierten Schaltkreis 1 ist ferner eine Speichereinheit 8 vorgesehen, welche ein Speicher-Interface 9 aufweist.

Es ist ein weiteres Speicher-Interface 10 vorgesehen, das für die in dem integrierten Schaltkreis 1 vorgesehenen Schaltungselemente eine Verbindung zu dem extern vorgesehenen Nur-Lese-Speicher 2 und dem extern vorgesehenen Schreib-Lese-Speicher 3 schafft.

Eine ferner in dem integrierten Schaltkreis 1 vorgesehene Daten-Empfangseinheit 11 ist gekoppelt mit Schaltungselementen des Fernsehgerätes 4. Entsprechendes gilt für ein Steuerungs-Interface 12 des integrierten Schaltkreises 1.

Der integrierte Schaltkreis 1 weist ferner einen Daten-Dekoder 13 auf.

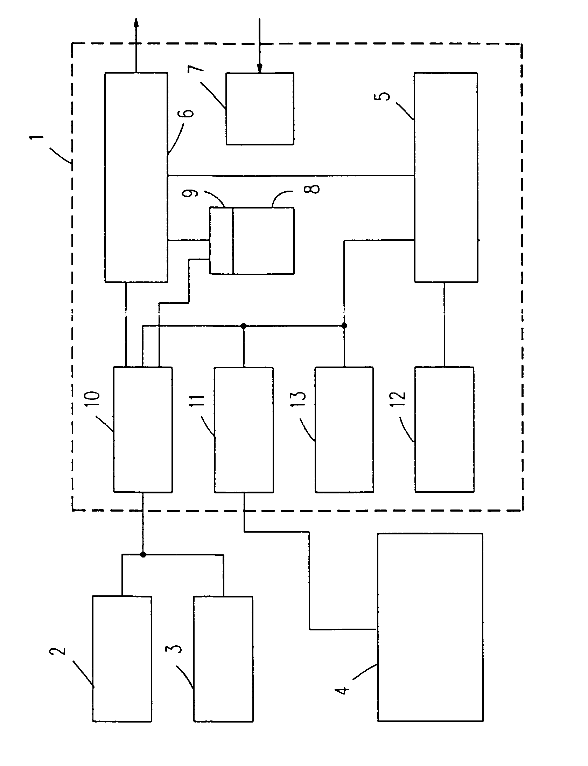

Im folgenden wird die Funktion der Schaltungsblöcke der Schaltungsanordnung gemäß der Fig. 1 näher erläutert.

Innerhalb des integrierten Schaltkreises 1 und auch für die Funktion der gesamten Schaltungsanordnung der Fig. 1 übernimmt der Mikroprozessor 5 eine wesentliche Funktion. da er quasi alle dargestellten Elemente steuert. Zur Steuerung benötigt der Mikroprozessor 5 ein Software-Programm, welches wenigstens teilweise in dem externen Nur-Lese-Speicher 2 abgespeichert ist.

Dieses Software-Programm gliedert sich vorteilhafterweise in wenigstens zwei Ebenen. Es ist eine sogenannte Betriebssystem-Software vorgesehen, welche direkt auf die Hardware des Mikroprozessors aufsetzt und als solche noch keine kompletten Funktionen ermöglicht. Diese relativ hardwareorientierte Betriebssystem-Software ist wenigstens teilweise in dem extern vorgelesenen Nur-Lese-Speicher 2 abgespeichert. Es kann ggf. ein Teil dieser Software auch in einem in der Fig. 1 nicht dargestellten in dem integrierten Schaltkreis 1 vorgesehenen Speicher abgespeichert sein. Die Vorteile der erfindungsgemäßen Schaltungsanordnung, die insbesondere in einer flexiblen Anpassung bestehen, werden durch ein ggf. vorgesehenes teilweises Abspeichern dieser Betriebssystem-Software in dem integrierten Schaltkreis nicht negativ tangiert, da diese Betriebssystem-Software unabhängig von der Anpassung an verschiedene Anwendungen ist. Sie ist hardwareorientiert und damit unabhängig von Veränderungen der gewünschten Funktionen.

In jedem Fall ist die auf diese Betriebssystem-Software aufsetzende Anwendungs-Software, die erst die eigentlichen Funktionen bereitstellt, vollständig in dem extern vorgesehenen Nur-Lese-Speicher 2 abgespeichert. Damit kann eine Anpassung dieser Software an veränderte Bedingungen leicht durch Austausch des Speichers 2 erfolgen.

Die Verbindung zu dem externen Nur-Lese-Speicher 2 und dem Schreib-Lese-Speicher 3 schafft das Speicherinterface 10. Über dieses werden aus den externen Speichern Daten gelesen bzw. in diese geschrieben.

Der Mikroprozessor kann Speicherbereiche in den externen Speichern, insbesondere in dem Schreib-Lese-Speicher 3 je nach Bedarf konfigurieren. Entsprechendes gilt für die in dem integrierten Schaltkreis vorgesehene Speichereinheit 8.

Für die Darstellung von Teletext oder für die Darstellung von On-Screen-Display-Funktionen benötigte Zeichensätze sind in dem externen Nur-Lese-Speicher 2 abgelegt. Über das Speicherinterface 10 können diese Daten gelesen werden und in dem integrierten Schaltkreis 1, gesteuert durch den Mikroprozessor 5, weiterverarbeitet werden.

Das Speicherinterface 10 für die externen Speicher und das Interface 9 der in dem integrierten Schaltkreis vorgesehenen Speichereinheit 8 sind direkt über einen DMA-Datenaustausch verbunden. Es kann auf diese Weise zwischen den Speichereinheiten ein direkter Datenaustausch stattfinden, der von dem Mikroprozessor 5 nur ausgelöst wird, der von diesem aber nicht im Detail gesteuert werden muß.

Der externe Nur-Lese-Speicher 2 kann nicht nur einen universellen Zeichensatz, sondern je nach Anwender individuelle Zeichensätze enthalten. Diese Zeichensätze können jederzeit aus dem Nur-Lese-Speicher 2 gelesen werden. Es entfällt somit das Erfordernis, solche individuellen Zeichensätze in einem anderen Fall in der integrierten Schaltung erforderlichen RAM abzulegen bzw. zwischenzuspeichern.

Sowohl der Mikroprozessor 5 wie auch der Anzeigegenerator 6 können auf die in dem integrierten Schaltkreis 1 vorgesehene Speichereinheit und die beiden externen Speicher 2 und 3 zugreifen. Dies geschieht in einem Time-Sharing-Verfahren.

Die Daten-Empfangseinheit 11 erhält alle Bildzeilen eines Fernsehsignals, das beispielsweise von dem Fernsehgerät 4 empfangen wird. Diese Daten bzw. Bildzeilen werden innerhalb der Daten-Empfangseinheit 11 analog digital gewandelt, die Einheit synchronisiert auf die gewandelten Daten auf und es wird innerhalb der Daten-Empfangseinheit 11 die Art der Daten festgestellt. Die Daten werden entsprechend markiert und in der internen Speichereinheit 8 abgelegt.

Von dem extern vorgesehenen Fernsehgerät 4 werden der Daten-Empfangseinheit 11 alle Bildzeilen angeboten. Die Daten-Empfangseinheit 11 filtert die relevanten aus.

Es muß sich dabei keineswegs nur um Teletext- bzw. Videotext-Daten handeln. Neuerdings wird in dem Fernsehsignal z.B. auch eine Kennung über das Format, also das Seiten-Höhen-Verhältnis des Bildes übertragen. Auch diese Information kann mittels der Daten-Empfangseinheit gewonnen und entsprechend markiert zur Verfügung gestellt werden.

Der in dem integrierten Schaltkreis 1 ferner vorgesehene Daten-Dekoder 13 dient dazu, ggf. kodierte Daten zu dekodieren. Dabei kann es sich beispielsweise um eine Hamming-Dekodierung, eine CRC-Fehlerkorrektur oder eine Entschlüsselung verschlüsselter Fernsehprogramme handeln. Der Daten-Dekoder 13 läuft immer mit, d.h. die Daten werden ihm immer zugeführt, unabhängig davon, ob es sich um kodierte oder unkodierte Daten handelt. Dies hat den Vorteil, daß dann, wenn erkannt wird, daß es sich um kodierte Daten handelt, diese nicht erneut zur Dekodierung dem Daten-Dekoder 13 zugeführt werden müssen. Dies wäre anderenfalls erforderlich, da zu dem Zeitpunkt, zu dem erkannt wird, daß es sich um kodierte Daten handelt, bereits ein Teil der Daten übertragen worden ist. Es müßten diese Daten dann dem Dekoder erneut zugeführt werden. Durch das ständige Mitlaufen des Dekoders erübrigt sich dieses erneute Lesen der Daten und die dekodierten Daten stehen unmittelbar zur Verfügung.

Bei dem in dem integrierten Schaltkreis 1 ferner vorgesehenen Steuerungs-Interface 2 handelt es sich um eine konfigurierbare Schnittstelle, der von dem Mikroprozessor 5 unterschiedliche Funktionen zugewiesen werden können. Beispielsweise können dem Steuerungs-Interface 12 sogenannte SADC-Funktionen realisiert sein. Dabei handelt es sich um Software-gesteuerte Analog-Digital-Konvertierung. Bei diesen wird das analoge Eingangssignal mit einem Digital-Analog-konvergierten analogen Signal verglichen. Dieser Vergleich liefert als Ergebnis, ob das extern zugeführte Signal großer oder kleiner dem Vergleichssignal ist. Dieses Vergleichssignal wird nachfolgend so lange verändert, bis es sich dem extern zugeführten analogen Signal weitestgehend angenähert hat. Damit ist dann der tatsächliche Wert des analogen Signals ermittelt. Derartige SADC-Funktionen können mittels des Steuerungs-Interfaces 12 beispielsweise zum Abfragen von Widerstandsmatrizen eingesetzt werden. Eine derartige Matrix besteht aus einem Netz von Widerständen, die punktweise, beispielsweise ausgelöst durch zu betätigende Tasten an dem Fernsehgerät 4, mit einem Bezugspotential verbunden werden. Die Widerstandsmatrix liefert dann ausgangsseitig ein in Abhängigkeit der betätigten Tasten variierendes analoges Signal. Dieses Signal kann dann mittels eines derartigen SADC ausgewertet werden.

Ferner können in dem Steuerungs-Interface 12 Pulsweitenmodulatoren realisiert sein, die Signale mit Impulsen variierender Breite liefern. Mittels dieser können vielfältige Steuerungsfunktionen in dem Fernsehgerät 4 vorgenommen werden. Dabei kann es sich beispielsweise um Steuerungen der Audiofunktionen, wie Lautstärke, Tone-Control oder Ähnliches handeln. Es können aber auch weitere Steuerungsvorgänge, wie beispielsweise des Tuners, vorgenommen werden.

Von dem Steuerungs-Interface 12 können ferner extern zugeführte Interrupts ausgewertet werden. Derartige Interrupts können z.B. dann ausgelöst werden, wenn Steuervorgänge zu markieren sind. Dabei kann es sich beispielsweise um Tastenbetätigungen, aber auch um andere in dem Fernsehgerät 4 ablaufende Vorgänge handeln. Allgemein werden derartige Interrupts zur Erkennung nicht synchroner Ereignisse eingesetzt.

In dem Steuerungs-Interface 12 sind ferner sogenannte Timer-Inputs vorgesehen, die zur Messung von Frequenzen und Impulsbreiten dienen. Ferner können sogenannte UARTS vorgesehen sein, die eine asynchrone serielle Daten-Übertragung sowohl zum Fernsehgerät 4 wie von diesem zum integrierten Schaltkreis 1 gestatten.

Der in dem integrierten Schaltkreis 1 vorgesehene Anzeige-Generator kann vielfältigen Einsatzzwecken dienen. Er kann beispielsweise für die Darstellung von Teletext (Videotext) vorgesehen sein, ist aber auch geeignet für die Darstellung sogenannter On-Screen-Display-Darstellungen, bei denen beispielsweise auf dem Bildschirm eingestellte Parameter wie Lautstärke, Tone-Control oder Ähnliches zur Anzeige gelangen. Ferner ist der Anzeige-Generator 6 zur Generierung bzw. zur Darstellung von Graphiken, auch hochauflösenden Graphiken, geeignet.

Dabei kann der Anzeige-Generator 6, wie bei Videotextfunktionen üblich, zeilenund spaltenorientiert in einer festen Matrix arbeiten. Dabei sind für verschiedene Matrixpositionen bestimmte Zeichen einzusetzen. Die dafür erforderlichen Daten werden von der Daten-Empfangseinheit 11 geliefert. Die Zeichen als solche sind in dem externen Nur-Lese-Speicher 2 oder dem Schreib-Lese-Speicher 3 abgespeichert und werden aus diesem über das Speicher-Interface 10 gelesen.

Darüber hinaus ist der Anzeige-Generator 6 dafür ausgelegt, hochauflösende Graphiken zu generieren. Dabei kann es sich beispielsweise um Graphiken handeln, die in einem Block 12 x 10 Bildpunkte mit jeweils zwei, vier oder 16 Farbwerten enthalten. Diese Graphikformate können jedoch auch verändert werden bzw. es können für verschiedene Anzeigezwecke verschiedene Graphikformate, wie z.B. 6 x 10 x 4 pro Block, vorgesehen sein. In diesem Fall benötigt der Anzeige-Generator von der Synchronisations-Einheit 7 jeweils angepaßte Taktsignale verschiedener Frequenz. Die entsprechende Steuerung übernimmt der Mikroprozessor 5.

Es können auf diese Weise quasi beliebige Graphiken erzeugt werden. Dabei sind die Daten einer Ausgangsgraphik in dem externen Nur-Lese-Speicher 2 abgespeichert und werden aus diesem ausgelesen. Diese Daten können dann zur Anzeige gelangen. Ferner besteht die Möglichkeit, diese Daten mittels des Mikroprozessors 5 weiterzuverarbeiten, d.h. zu verändern. Die dabei entstehenden Daten der Zwischenschritte können in dem externen Schreib-Lese-Speicher 3 oder in der internen Speicher-Einheit 8 abgespeichert werden. Dies kann beispielsweise in der Weise geschehen, daß in der internen Speicher-Einheit die Zeilen-Spalteninformation abgespeichert wird und daß in dem externen Speicher die Information über die einzelnen Bildpunkte bzw. Pixel abgespeichert wird. Dabei können in dem externen Speicher außer diesen reinen Bildpunktdaten zusätzliche Modeinformationen abgespeichert werden, die angeben, wie die gespeicherten Pixeldaten zu interpretieren sind. Diese Modedaten geben das Format der Daten an, also beispielsweise wie viele Bilddaten für einen Bildpunktblock in horizontaler oder vertikaler Richtung vorgesehen sind und wie viele Farbinformationen für jeden Bildpunkt dieses Blockes vorgesehen sind.

Es ist klar, daß insbesondere für derartige hochauflösende Graphiken insbesondere bei deren Veränderung sehr große Datenmengen entstehen. Bei Schaltungsanordnungen nach dem Stande der Technik müßten diese Zwischenschritte alle in dem externen Nur-Lese-Speicher 2 abgespeichert sein. In der erfindungsgemäßen Schaltungsanordnung wird sehr viel Speicherplatz dadurch eingespart, daß nur noch die Ausgangsdaten abgespeichert werden.

Sind, wie oben erläutert, derartige hochauflösende Graphiken erzeugt und ihre Daten in dem externen Schreib-Lese-Speicher 3 und der internen Speicher-Einheit 8 zwischengespeichert, so werden zum Darstellen einer derartigen Graphik zunächst aus der internen Speichereinheit 8 die Zeilen-Spalten-Informationen ausgelesen. Damit ist bekannt, welche Bildpunktdaten aus dem externen Speicher 2 oder 3 benötigt werden. Diese werden gelesen. Anhand der Modeinformation ist bekannt, welche Daten für die Farbwiedergabe maßgeblich sind. Die entsprechenden Bits werden von dem Anzeige-Generator 6 zur Auswahl der Farben aus einer Farbpalette eingesetzt.

Der Anzeige-Generator 6 weist einen in der Darstellung gemäß Fig. 1 nicht angedeuteten Digital-Analog-Wandler auf, mittels dessen zunächst die digitalen Bilddaten in analoge Signale umgewandelt werden, die zur Darstellung beispielsweise auf einem Bildschirm des Fernsehgerätes 4 gelangen können. Dabei können die Pixeldaten mit einem sogenannten Blendingwert versehen sein, welcher einen Wert für ein Überblenden angibt. Damit kann ein Mischverhältnis festgelegt werden, mit dem die Graphiken und ein Videobild darzustellen sind.

In der Speichereinheit 8 oder auch in einer weiteren ggf. vorzusehenden Speicher-einheit kann ein sogenannter Graphik-Cursor abgespeichert sein. Ein solcher Graphik-Cursor kann verschiedene Formen aufweisen, die je nach Einsatzzweck individuell ausgewählt werden können. Diese Cursor-Daten können aus dem Speicher von dem Anzeige-Generator 6 aufgerufen und ebenfalls zur Anzeige gebracht werden.

Der Mikroprozessor 5 kann den Anzeige-Generator 6 konfigurieren. Eine derartige Konfigurierung kann beispielsweise im Hinblick auf das Anzeigeformat (Bild-Seiten-Höhenverhältnis), Zahl der Zeilen bzw. Spalten der Darstellung, Zweiseiten-Darstellung für Videotext und Ähnlichem bestehen.

Zusammenfassend ist festzustellen, daß der in dem integrierten Schaltkreis 1 vorgesehene Mikroprozessor alle Steuerungsaufgaben innerhalb des integrierten Schaltkreises 1 vornimmt. Er dient darüber hinaus der Steuerung beliebiger Funktionen in dem Fernsehgerät 4 und greift über das Speicher-Interface 10 auf externe Speicher 2 und 3 zu. In dem Mikroprozessor 5 laufen alle Programme ab, die zum Steuern von Funktionen erforderlich sind.

Damit wird einerseits ein weiterer externer Mikroprozessor eingespart. Andererseits hat die erfindungsgemäße Schaltungsanordnung den Vorteil, daß der externe Nur-Lese-Speicher 2 leicht an verschiedene Einsatzbedingungen angepaßt werden kann. Die in ihm enthaltenen Software-Programme, insbesondere die anwendungsorientierten Software-Programme können jederzeit geändert werden bzw. es kann der Nur-Lese-Speicher 2 durch einen anderen ersetzt werden. Änderungen dieser Programme oder auch der ebenfalls in dem Nur-Lese-Speicher 2 abgespeicherten Zeichensätze erfordern keine Änderungen des integrierten Schaltkreises 1. Somit ist eine sehr flexible Anpassung an verschiedene Umgebungsbedingungen gewährleistet.

## Patentansprüche

1. Schaltungsanordnung mit einer integrierten Schaltung (1), in der ein Mikroprozessor (5) vorgesehen ist, der einen in der integrierten Schaltung (1) vorgesehenen Anzeigegenerator (6) für Teletext- und/oder On-Screen-Display-Funktionen steuert und der mittels eines in der integrierten Schaltung (1) vorgesehenen Steuerungs-Interfaces (12) Steuerungsfunktionen eines Fernsehgerätes (4) wahrnimmt, dadurch gekennzeichnet,
daß in der integrierten Schaltung (1) ein Speicher-Interface (10) zu einem außerhalb der integrierten Schaltung (1) vorgesehen Nur-Lese-Speicher (2) vorgesehen ist und daß der Nur-Lese-Speicher (2) wenigstens einen Teil des Programm-Codes für den Mikroprozessor (5) und wenigstens einen Zeichensatz für die Teletext-Funktion und ggf. weitere vorgesehene Anzeigefunktionen enthält.

2. Schaltungsanordnung nach Anspruch 1, dadurch gekennzeichnet,
daß eine Betriebssystem-Software für den Mikroprozessor (5) vorgesehen ist, welche wenigstens teilweise in dem externen Nur-Lese-Speicher (2) abgespeichert ist und welche eine Software-Schnittstelle aufweist, auf die Anwendungsprogramme aufsetzbar sind, welche ausschließlich in dem externen Nur-Lese-Speicher (2) abgespeichert sind.

3. Schaltungsanordnung nach Anspruch 1 oder 2, dadurch gekennzeichnet,
daß in der integrierten Schaltung eine Daten-Empfangseinheit (11) vorgesehen ist, über die von einer externen Signalquelle, insbesondere einer Empfangseinheit eines Fersehgerätes (4), Teletext-Daten sowie ggf. weitere Daten empfangen werden, die in der Daten-Empfangseinheit (11) identifiziert und Analog/Digital-gewandelt werden, und daß die von der Empfangs-Einheit (11) gelieferten digitalen Daten der integrierten Schaltung Software-gesteuert mittels des Mikroprozessors (5) dekodiert und weiterverarbeitet werden.

4. Schaltungsanordnung nach einem der Ansprüche 1 bis 3, dadurch gekennzeichnet,
daß der Anzeigegenerator (6) zum Aufbau beliebiger Graphiken ausgelegt ist, deren Ausgangs-Daten der integrierten Schaltung (1) von außen, insbesondere von dem externen Nur-Lese-Speicher (2), zugeführt werden und die in der integrierten Schaltung (1) weiterverarbeitet werden.

5. Schaltungsanordnung nach Anspruch 4, dadurch gekennzeichnet, daß mittels des Mikroprozessors (5) Sofware-gesteuert beliebige Pixelgraphiken aus in dem externen Nur-Lese-Speicher (2) abgelegten Ausgangsdaten generiert werden, wobei diese Pixelgraphiken eine vorwählbare Pixel- und Farb-Auflösung aufweisen und gegebenenfalls nach Zwischenspeicherung mittels der Anzeigeeinheit (6) in ein für eine Anzeige geeignetes Format gebracht werden.

6. Schaltungsanordnung nach einem der Ansprüche 1 bis 5, dadurch gekennzeichnet,
daß in der integrierten Schaltung (1) wenigstens eine Speichereinheit (8) für eine Zwischenspeicherung hochauflösender Graphiken und/oder eines graphischen Cursors vorgesehen ist.

7. Schaltungsanordnung nach einem der Ansprüche 1 bis 6, dadurch gekennzeichnet,
daß in der integrierten Schaltung (1) ein Daten-Dekoder (13) für Sonderfunktionen, wie zum Beispiel Hamming-Dekodierung, CRC-Fehlerkorrektur oder Entschlüsselung verschlüsselter Programme vorgesehen ist.

8. Schaltungsanordnung nach einem der Ansprüche 1 bis 7, dadurch gekennzeichnet,
daß der Daten-Dekoder (13) ständig ihm zugeführte Daten dem Dekodier-Prozeß unterzieht und daß die Ausgangsdaten des Dekoders nur dann abgefragt werden, wenn es sich um kodierte Daten handelte.

9. Schaltungsanordnung nach einem der Ansprüche 1 bis 8, dadurch gekennzeichnet,
daß in der integrierten Schaltung (1) eine Synchronisier-Einheit (7) vorgesehen ist, welche aus einem extern zugeführten Taktsignal in dem integrierten Schaltkreis (1) benötigte Taktsignale verschiedener Frequenz generiert.

10. Schaltungsanordnung nach den Ansprüchen 5 und 9, dadurch gekennzeichnet,
daß die Synchronisier-Einheit (3) die für den Anzeige-Generator (6) erzeugten Taktsignale bezüglich ihrer Frequenz in Abhängigkeit der Anzeigeparameter eines gewählten Graphikstandards variiert.

11. Fernsehgerät mit einer Schaltungsanordnung nach einem der Ansprüche 1 bis 10.
